# EUROPEAN PATENT APPLICATION

(11) **EP 4 573 911 A1**
(43) Date of publication of application: **25.06.2025**
(21) Application number: 23020568.4
(22) Date of filing: 21.12.2023
(51) Int. Cl.: A22B 3/08, A22C 21/00

(54) **METHOD OF EXTENDING THE SHELF LIFE OF BROILER CHICKEN MEAT**

(71) Applicant: Podwislocze Inwestycie Sp. z o.o., 00-116 Warszawa (PL)
(72) Inventor: Jedrzejewska, Iwona, 35-505 Rzeszów (PL)
(74) Representative: Matyka, Malgorzata

(57) **Abstract**

The invention relates to a method for extending the shelf life of broiler chicken meat. A procedure to ensure the hygiene and quality of chicken meat through controlled cooling and reducing microbial growth, allowing meat to be stored for up to 12 days.

## Description

The invention relates to a method for extending the shelf life of broiler chicken meat. A procedure to ensure the hygiene and quality of chicken meat through controlled cooling and reducing microbial growth, allowing meat to be stored for up to 12 days.

The production of poultry meat, and broiler chicken meat in particular, has been one of the fastest growing segments of the meat market in Poland and around the world over the past several years. The most common method of preserving poultry meat for short-term storage is refrigeration. A significant amount of poultry meat traded in the Commercially, it is offered in refrigerated form. The shelf life of refrigerated poultry meat depends primarily on the initial bacterial count. The initial bacterial count is influenced by live factors related to the hygiene of the birds' maintenance, transport conditions, and sanitary conditions during handling pre-slaughter, slaughter as well as post-slaughter operations. Of particular importance in each of these stages is temperature, which is the main factor that promotes (or inhibits) the growth of bacterial microflora. The dependence of poultry meat shelf life on storage temperature has the character of a decreasing exponential function, which means that the even a slight increase in storage temperature invokes a significant reduction in the shelf life of meat. Bacterial growth above 3-4 logarithmic values compared to the initial contamination is accompanied by organoleptic changes including a change in the appearance and odor of meat. According to the literature, the first changes in odor are observed when the number of bacteria/cm² is between 1.6 × 10⁵ and 1 × 10⁹ . When the number of bacteria exceeds 1 × 10⁴/cm² visible signs of meat spoilage, unpleasant ammonia and hydrogen sulfide odor begin to appear, and when the number of bacteria/cm² exceeds 10⁸ bacteria/cm² mucus appears on the meat surface.

In production practice, there are no precise criteria for determining the permissible period of cold storage of poultry meat. The most common such criterion is the total number of bacteria in 1g of culinary meat equal to 5 × 10⁶ , and production practice shows that fresh unpackaged broiler chicken meat can be stored under conditions of refrigerated (0-4°C) for no longer than 6-7 days.

The applicant has developed a method that will extend the shelf life of meat by about half as long as currently practiced, i.e. to at least 12 days after slaughter. It will be possible to achieve the anticipated effects by using solutions to maintain a high hygienic standard during the entire pre-slaughter and post-slaughter process, as well as applying innovative process solutions for cooling after the plucking stage, which have not been used so far.

An analysis of scientific publications showed that a significant amount of poultry meat on the market is offered chilled, which is in line with the expectations of consumers and processing plants.

Fresh meat stored under refrigeration has a short shelf life, which is determined by the progressive deterioration of sensory quality and an increase in the level of bacterial contamination with storage time. Deterioration of meat freshness indicators progresses with increasing temperature storage. Modern scientific research on extending the shelf life of poultry meat mainly focuses on storing poultry meat in a modified/controlled atmosphere and using various types of packaging, often enriched with chemical or organic components. There are also papers indicating the possibility of using meat preservative additives, various types of coatings or gamma and UVC radiation. In contrast, studies on the possibility of extending the shelf life of fresh, refrigerated meat not subjected to packaging are relatively rare and address the influence of only single factors on extending the shelf life of poultry meat.

The key process innovation in the filing relates to meat procurement and storage technology, including the development of an innovative refrigeration plant leading to extended shelf life of unpackaged broiler chicken meat.

Taking into account the results of the market analysis and the analysis of the state of the art, it was concluded that this solution has no equivalent on the market. To date, it has not been possible to develop and implement solutions on the market that guarantee economically viable production of poultry meat offered without functional packaging, with such a long shelf life, while maintaining economically reasonable production efficiency and maintaining process parameters in terms of the required technological optimum of the process, as well as the product.

The developed technology will make it possible to market poultry meat in the form of breast muscles, which will have a storage time of at least 12 days without signs of organoleptic changes and microbial load of the total bacterial count 5×10⁶ . Production of poultry meat, especially broiler chicken meat in the last several years is one of the fastest growing segments of the meat market in Poland and the world. Broiler chicken meat is currently of great interest to consumers due to its high nutritional and dietary value, desirable sensory appeal and relatively low price.

The purpose of the invention is to develop an effective method for extending the shelf life of broiler chicken meat stored under refrigeration for at least 12 days.

The subject of the invention is a method for extending the shelf life of broiler chicken meat stored under refrigeration, which includes the following steps:
- Along the passage section from the moment of suspension on the stirrups to the entrance to the water-electric stunner, the massager mimics the calming effect for broiler chickens,
- The carcass, which is then suspended in stirrups, undergoes washing by passing through nozzles and then through the area of brush rollers, opening the feathers to the scalding stage,
- Cooling the carcass after plucking, before evisceration, using ice water,
- carcass evisceration,
- washing and disinfection equipped with high-pressure nozzles for washing the gutting spoons, nests and supports results in a reduction of microbial cross-contamination at this stage,
- follows the splitting of carcasses, automatic cutting of breast muscles and automated calibration of carcasses, and then placing them in shipping containers.

The method, where as a result of measures taken to improve the level of chick welfare including the elimination of potential stress factors, including those causing mechanical injury, optimization of thermal conditions during loading, transport and unloading, and the installation of a chicken breast massager on the suspension line, a carcass pH of 5.93 ± 0.06 was achieved.

The method, where Cascada cooler consists of supplying ice water of about 1.5 °C, on the carcasses at a distance of about 3 m, the temperature is reached in no more than 5 minutes, and the temperature of the carcass after plucking is 35° C.

The method where the cooling of the carcass after evisceration involves moving carcasses suspended from stirrups, where spray nozzles apply "ice mud" to the outside and inside of the carcass.

The method where ice mud has 82 times the cooling capacity of ice water.

The method where, after the whole process, the carcass reaches a temperature of 2°C in less than 120 minutes.

The method to ensure that meat storage temperatures are maintained at 0-2°C with ongoing temperature monitoring to reduce the growth rate of microorganisms in meat.

The method where after the whole process the total number of bacteria in 1 g was max. 5× 10⁶ on the 12th day of storage.

### Description of the tables:

**Table 1 -** shows the results of the evaluation of physicochemical characteristics of raw breast meat of broiler chickens at all x±SD stages.
**Table 2** - shows the results of carcass temperature after the plucking process, before the evisceration process (22.08.2023 Cascada cooler was introduced).
**Table 3** - shows the results of the temperature of the carcass after 120 minutes of air cooling (22.08.2023 "ice mud" technology was introduced).
**Table 4** - shows the results of meat storage temperatures at 0-2°C.
**Table 5** - shows the results of microbiological quality of raw breast meat of broiler chickens in the third (III) stage (X±SD).

The invention is illustrated by the following non-limiting example.

### Example:

A new method of extending the shelf life of refrigerated broiler chicken meat provides a storage time for breast muscle without signs of organoleptic changes and microbial load of the total bacterial count in 1 g 5× 10⁶ - at least 12 days from the time of slaughter (number of days of refrigerated storage).

The method (process) of extending the shelf life of broiler chicken meat stored under refrigeration has the following steps:

### 1) Stage I

- measures to relax the birds, which include the installation of a chicken breast massager along the suspension line, along the passage section from the time of suspension on the stirrups to the entrance of the water-electric stunner, imitating the conditions of rearing on a farm, showing a calming effect on broiler chickens.
- pre-washing of carcasses, during which contaminants are removed from the surface of the feathers.

This step violates the tile-like arrangement of the feathers which facilitates access of water or steam to the sheaths and helps lower the plucking temperature. A special steam generator has been adapted to lower the scalding temperature and shorten the time of this process, helping to save water. After passing through the nozzles, the carcass is moved through the brush roller area, opening the feathers to improve the scalding process. The effectiveness of the measures was evaluated by the amount of remaining feathering on the carcass.
- Cooling the carcass after plucking, before evisceration, using ice water.

Cascada cooler is an advanced carcass cooling system equipped with two wide-flow nozzles and a special tub for collecting ice water. Its technology involves moving carcasses suspended on stirrups through its center. In a continuous system, water at a temperature of about 1.5 °C is applied to the carcasses over a distance of about 3 m. This technical solution for carcass cooling is innovative and completely new. Unlike current practices around the world, where cooling begins after the evisceration process, the solution used allows cooling to begin as soon as the carcass is plucked, about 15 minutes earlier. As a result, the carcass reaches a temperature of 35°C instead of 41°C, which significantly reduces the possibility of microbial growth.
- additional equipment was installed at the evisceration stage to cut off and remove the carcass parts characterized by the highest microbiological contamination. The introduction of an innovative washing and disinfection system equipped with high-pressure nozzles for washing eviscerator spoons, nests and supports results in a reduction of cross-contamination of microbial contamination at this stage.

The goal of this stage was to quickly reduce the temperature of the carcass after evisceration, using innovative methods. The main action was the use of "ice mud" (fine crystals of sticky ice) in combination with booths that spray and wet the carcasses from the outside, as well as inside. The ice dispensing system, based on directional spray nozzles, is equipped with an "ice mud" generator with a set of sensors and a controller to produce ice of the right consistency. Specially designed nozzles allow precise spraying of "ice mud" on the moving carcass.

Thanks to this technological solution, it was possible to achieve a carcass temperature of 2°C after exiting the chiller, in less than 120 minutes. "Ice mud" used in the process, had 82 times the cooling capacity of ice water. The ice-water slurry applied to the outer and inner surfaces of the carcass further increased the cooling capacity and reduced the growth of microflora.

Both treatments were aimed at improving the microbiological cleanliness of the slaughter line and thus reducing the possibility of cross-infection, ultimately improving the microbiological quality of the carcasses.

Personalized systems for carcass splitting, automatic cutting of breast muscles, and automated calibration of carcasses and their subsequent placement in shipping containers were made and implemented. The measures taken to improve the level of chicken welfare, which include the elimination of potential stress factors, including those causing mechanical injuries, optimization of thermal conditions during loading, transport and unloading, and the installation of a chicken breast massager on the suspension line, can be considered reasonable and effective for improving the welfare of the birds and the quality of the meat obtained, as indicated by the results obtained. One of the commonly accepted indicators of meat quality is pH, which can directly or indirectly affect other meat quality characteristics. Final pH is related to water absorption, as well as meat quality traits: color, palatability, texture, and storage life and suitability for further processing. As a result of the measurements carried out in the first stage of the study, it was found that the pH value of the meat tested was within the range characteristic of broiler chicken meat, at 5.93 ± 0.06, which may indicate a normal rate of glycolytic metabolism. This, in turn, may suggest that incidents of acute stress were reduced during the pre-slaughter period. Indeed, pre-slaughter stress contributing to muscle glycogen consumption may result in reduced lactic acid production in muscle and excessively high meat pH. Rapid post-slaughter glycolysis when the carcass temperature is still high, on the other hand, results in a rapid drop in pH and low pH values. As a result of the innovative measures taken in the first stage of the project, a reduction in the temperature of the carcass after plucking to 35° C was achieved, which can be considered beneficial for reducing the overly intense glycolysis process. In addition, the reduction of carcass temperature at this stage of production can be considered as a factor limiting the rate of microbial proliferation. Microbiological evaluation of the skin of birds showed that after the introduction of the solutions provided in the project to maintain a high standard of hygiene, the skin of chickens was characterized by a bacterial load of 1.67×10⁴ for the total number of bacteria and 7.14×10³ *for Pseudomonas ssp.* With the time of storage, the microbial load of the skin increased, reaching 6.00×10⁷ for the total number of microorganisms and 3.25×10⁶ *for Pseudomonas ssp.*

### 2) Stage II

- Measuring the effectiveness of logistics and technological solutions included temperature monitoring to eliminate the problem of sunshine and high temperatures on the unloading apron. A system for ventilating containers with large-volume fans was introduced, and a fine-drop sprinkler system was installed that operated at temperatures above 28°C. Thanks to these measures, it was possible to keep the ambient temperature of cars awaiting slaughter at no more than 28°C, reducing the problem of heat stress.

Measurements taken at the indicated critical control points of pre-slaughter handling showed fewer injuries and contusions after transport and unloading, compared to standard measures. Previously unused measures were also taken to relax the birds, i.e. a chicken breast massager was installed on the suspension line. Measurements of breast muscle pH confirmed the effectiveness of the introduced measures. The percentage of congestion of the pectoral muscle and wings was evaluated, with a result of 0.038%.
- The pre-washing procedure is carried out after the bleeding process, before scalding. The device consists of a support frame and a system of atomizing nozzles that reduce water consumption by 40%. The nozzles are powered by water and compressed air, which causes the water droplet to be accelerated to 900 km/h. The powerful jet of water effectively removes contaminants from the surface of the feathers, partially opening the feathers. The carcass then enters the working area of the brush rollers that open the layers of the feathers, improving the scalding process. The effectiveness of the action has been documented with fewer remaining feathers.
- Additional machinery was implemented at the gutting process stage, eliminating the parts of the carcass most susceptible to the presence of microorganisms. A washing system was implemented, equipped with high-pressure nozzles. Washing the interior of the carcasses is important and aims to eliminate any possible residues of offal fragments, intestines or digestive contents. Evaluation of the effectiveness of the measures taken at this stage was made based on the percentage of carcasses containing residues. The results of the evaluation confirm the achievement of the milestone.
- Tests conducted in the second (II) stage indicate a good initial quality of chicken meat. This is indicated by the values of quality characteristics measured on the first day of storage. The main factor responsible for the shelf life of poultry meat is the development of microflora. The limit for the total microbial count for edible fresh broiler chicken meat is 7 log cfu/g (ICMSF, 2011). The initial microbial count obtained in Stage II chicken meat was 1.27 ×10⁴ . With storage time, the total microbial count in chicken meat gradually increased reaching 1.16×10⁷ on the 12th day of storage. Thus, the threshold for an acceptable level of microbial contamination was exceeded despite the fact that the sensory evaluation carried out did not disqualify the tested meat.

### 3) Stage III

- A study of the effectiveness of cooling the carcass to 2°C, using an innovative "ice mud" spray technique included monitoring the temperature and the time required to reach it. Successful cooling of the carcass to 2°C in less than 120 minutes was confirmed
- A proprietary method of purifying and circulating air in production and storage areas using ventilation systems equipped with HEPA filters and ionization was implemented, resulting in the retention of 99% of pollutants present in the air. UV lamps were fitted to process lines, disinfecting machinery and equipment after operation.

A technology was developed to remove biofilm from machine surfaces using a chlorine dioxide generator. This generator supplied fresh chlorine dioxide to the water with concentration control.

A technology was developed for an automatic, continuous conveyor belt washing and disinfection system equipped with washing bars for conveyor belts that have been in contact with meat, in order to reduce the risk of cross-infection.
- The initial microbial count found in stage III chicken meat was 2.54×10³ . With the time of storage, the total number of microorganisms in chicken meat gradually increased, reaching a value of 3.24×10⁶ on day 12 . Thus, in summary, it can be said that the introduction of the previously mentioned innovative solutions for improving the welfare of chickens in the pre-slaughter period, innovative cooling techniques on the slaughter line and optimization of meat storage reduced the growth of microorganisms and allowed the meat to remain fit for consumption until the 12th day of storage, which was not achieved in stage II. The anticipated milestone in Stage III was thus achieved.

In the tests conducted in Stage III, the highest scores, i.e. 5.0 points, for all raw meat traits tested, i.e. intensity and desirability of aroma, external color and section color, texture and overall appearance, were awarded on the first day of evaluation. On subsequent evaluation dates, the marks awarded for each trait gradually decreased and on the 12th day reached a value above 3 points. A similar trend of changes in sensory attributes was found in the evaluation of heat-treated meat. Thus, the sensory quality of meat up to day 12 remained at an acceptable level. Other meat quality characteristics were typical for this type of raw material. In summary, it can be concluded that chicken breast meat stored under refrigeration at a temperature not exceeding 2° C retained its suitability for consumption for 12 days.

### Tables:

### studies performed

### Stage I

| | **Type of analysis/study** | **Number of samples/range of tests** | **Type of raw material** |
|---|---|---|---|
| **Testing the quality of broiler chicken carcasses and meat at the slaughter and evisceration, including:** | | | |
| 1. | Measuring the temperature of carcasses after the plucking process, and before the evisceration process | 100 measurements × 3 test repetitions of tests = 300 measurements, testing inside the pectoral muscle | raw pectoral muscle |
| 2. | Skin color assessment using a colorimeter with a head for measuring color on the CIE LAB scale | 100 measurements × 3 test repetitions of tests = 300 measurements | skin |
| 3. | Measurement of breast muscle pH immediately after slaughtering | 100 measurements × 3 test repetitions of tests = 300 measurements, testing inside the pectoral muscle | raw pectoral muscle |
| 4. | Muscle electrical conductivity test | 100 measurements × 3 test repetitions of tests = 300 measurements, testing inside the pectoral muscle | raw pectoral muscle |
| 5. | Microbiological evaluation of broiler chicken skin samples taken from the slaughter line. Microbiological analysis will include total microbial counts and *Pseudomonas* counts taken from skin samples on days 1, 3, 5, 7, 8, 9, 10, 11, 12 of refrigerated storage under stable temperature conditions 2° of C+/-0.5°C. | 10 samples × 9 dates of measurement of a given trait on the day of slaughter (1) and on 3,5,7,8,9,10,11,12 days of refrigerated storage under stable temperature conditions of 2°C +/-0.5°C) × 3 repetitions of the test cycle = 270 measurements of the tested trait | skin |
| 6. | Skin color assessment using a colorimeter with a head for measuring color on the CIE LAB scale | 10 measurements × 9 measurement dates of the given trait on the day of slaughter (1) and on 3,5,7,8,9,10,11,12 days of refrigerated storage under stable temperature conditions of 2°C +/- 0.5°C) × 3 repetitions of the test cycle = 270 measurements of the tested trait | skin |
| 7. | Examination of pH, WHC, thermal loss, tenderness, color, evaluation of sensory characteristics of breast muscle at 1,3,5,7,8,9,10,11,12 days of refrigerated storage under stable temperature conditions of 2°C +/- 0.5°C) | 10 measurements × 9 dates on the day of slaughter (1) and on day 3,5,7,8,9,10,11,12 of refrigerated storage under stable temperature conditions of 2°C +/- 0.5°C) × 3 repetitions of the test cycle = 270 measurements of each trait tested (pH, WHC, thermal loss, tenderness, color, evaluation of sensory characteristics) | raw pectoral muscle |

### Stage II:

| **Type of analysis/study** | | **Number of samples/range of tests** | **Type of raw material** | |
|---|---|---|---|---|
| **Study of breast muscle quality of broiler chickens at the cooling and cutting stage involving:** | | | | |
| 1. Evaluation of Technological parameters of meat (pH, WHC -water absorption by Grau and Hamm's method, thermal losses and refrigeration leakage) | | 10 measurements × 9 measurement dates on the day of slaughter (1) and on day 3,5,7,8,9,10,11,12 of refrigerated storage under stable temperature conditions of 2°C +/- 0.5°C) × 3 repetitions of the test cycle = 180 measurements for each trait tested (pH, WHC -hydro absorption by Grau and Hamm method, thermal loss and refrigerated leakage) | raw pectoral muscle | |
| 2. Assessment of physical and chemical characteristics: | | | | |
| a) Brittle ness measured by cutting force using a testing machine equipped with a 60° single-leg cutting system with appropriate softwa re | | 10 measurements × 9 measurement dates on the day of slaughter (1) and on day 3,5,7,8,9,10,11,12 of refrigerated storage under stable temperature conditions of 2°C +/- 0.5°C) × 3 repetitions of the test cycle = 270 measurements for the trait tested | raw pectoral muscle | |
| b) Meat color using a colorimeter on the CIE LAB scale | | 10 measurements × 9 measurement dates of a given trait on the day of slaughter (1) and on 3,5,7,8,9,10,11,12 days of refrigerated storage under stable temperature conditions of 2°C +/- 0.5°C) × 3 repetitions of the test cycle = 270 measurements for the tested trait | raw pectoral muscle | |
| 3. Determination of basic chemical composition of meat (total protein, fat and ash content) | | 10 samples × 3 measurement dates at 1,5,12 days of refrigerated storage under stable temperature conditions at 2°C +/- 0.5°C) × 3 repetitions of the test cycle = 90 measurements for the trait tested | raw pectoral muscle | |
| 4. Evaluation of sensory characteristics | | 10 samples × 9 measurement dates on the day of slaughter (1) and on day 3,5,7,8,9,10,11,12 of refrigerated storage under stable temperature conditions of 2°C +/- 0.5°C) × 2 repetitions of the test cycle = 180 measurements for the trait tested | raw pectoral muscle | |
| 5. Microbiologica l evaluation of broiler breast muscle samples Microbiological analysis will include total microbial counts and *Pseudomonas* counts | | 10 samples × 9 measurement dates on the day of slaughter (1) and on day 3,5,7,8,9,10,11,12 of refrigerated storage under stable temperature conditions of 2°C +/- 0.5°C) × 3 repetitions of the test cycle = 270 measurements for the trait tested | raw pectoral muscle | |
| 6. Measurement of the pH of the pectoral muscles | | | breast muscle after heat treatment | |
| | | 10 measurements × 9 measurement dates on the day of slaughter (1) and on day 3,,5,7,8,9,10,11,12 of refrigerated storage under stable temperature conditions of 2°C +/- 0.5°C) × 3 repetitions of the test cycle = 270 measurements for the trait under study* | | |
| 7. Evaluation of physical characteristics: | | | | |
| a) Brittleness measured by cutting force using a testing machine equipped with a 60° single-leg cutting system with appropriate softwa re | | 10 measurements × 9 measurement dates on the day of slaughter (1) and on day 3,5,7,8,9,10,11,12 of refrigerated storage under stable temperature conditions of 2°C +/- 0.5°C) × 3 repetitions of the test cycle = 270 measurements for the trait tested | breast muscle after heat treatment | |
| b) Meat color using a colorimeter on the CIE LAB scale | | 10 measurements × 9 measurement dates on the day of slaughter (1) and on day 3,5,7,8,9,10,11,12 of refrigerated storage under stable temperature conditions of 2°C +/- 0.5°C) × 3 repetitions of the test cycle = 270 measurements for the trait tested | breast muscle after heat treatment | |
| 8. Evaluation of sensory characteristics | | 10 samples × 9 measurement dates on the day of slaughter | breast muscle after heat treatment | |
| | | (1) and on day 3,5,7,8,9,10,11,12 of refrigerated storage under stable temperature conditions of 2°C +/-0.5°C) × 3 repetitions of the test cycle = 270 measurements for the trait tested | | |
| 9. Post-cooking performance/t hermal loss | | 10 samples × 9 dates on the day of slaughter (1) and on day 3,5,7,8,9,10,11,12 of refrigerated storage under stable temperature conditions of 2°C +/- 0.5°C) × 3 repetitions of the test cycle = 270 measurements for the trait tested | breast muscle after heat treatment | |

### Stage III

| **Type of analysis/study** | | | **Number of samples/range of tests** | **Type of raw material** |
|---|---|---|---|---|
| **Study of breast muscle quality of broiler chickens at the storage stage involving:** | | | | |
| 1. Evaluation of | | | 10 measurements × 9 measurement dates on the day | raw pectoral muscle |
| technological parameters of meat (pH, WHC -water absorption | | | of slaughter (1) and on day 3,5,7,8,9,10,11,12 of refrigerated storage under stable temperature conditions of 2°C +/- 0.5°C) × 3 repetitions of the test cycle | |
| | by Grau and Hamm's method, thermal losses | | = 180 measurements for each trait j tested (pH, WHC -hydro absorption by Grau and Hamm method, | |
| | and refrigeration leakage) | | thermal loss and refrigerated leakage) | |
| 2. Assessment of physical and chemical characteristics: | | | | |
| | c) Brittleness | | 10 measurements × 9 measurement dates on the day | raw pectoral muscle |
| | | measured by cutting force using a testing machine equipped | of slaughter (1) and on 3,5,7,8,9,10,11,12 days of refrigerated storage under stable temperature conditions of 2°C +/- 0.5°C) × 3 repetitions of the test | |
| | | with a 60° single-leg cutting system with appropriate Software | cycle = 270 measurements for the trait tested | |
| | | d) Meat color using a colorimeter on the CIE LAB scale | 10 measurements × 9 measurement dates of a given trait on the day of slaughter (1) and on 3,5,7,8,9,10,11,12 days of refrigerated storage under stable temperature conditions of 2°C +/-0.5°C) × 3 repetitions of the test cycle = 270 measurements for the tested trait | raw pectoral muscle |
| | | 3. Determination of basic chemical composition of meat (total protein, fat and ash content) | 10 samples × 3 measurement dates at 1,5,12 days of refrigerated storage under stable temperature conditions at 2°C +/- 0.5°C) × 3 repetitions of the test cycle = 90 measurements for the trait tested | raw pectoral muscle |
| | | 4. Evaluation of sensory characteristics | 10 samples × 9 measurement dates on the day of slaughter (1) and on day 3,5,7,8,9,10,11,12 of refrigerated storage under stable temperature conditions of 2°C +/- 0.5°C) × 2 repetitions of the test cycle = 180 measurements for the trait tested | raw pectoral muscle |
| | | 5. Microbiological evaluation of broiler breast muscle samples Microbiological analysis will include total microbial counts and | 10 samples × 9 measurement dates on the day of slaughter (1) and on day 3,5,7,8,9,10,11,12 of refrigerated storage under stable temperature conditions of 2°C +/- 0.5°C) × 3 repetitions of the test cycle = 270 measurements for the trait tested | raw pectoral muscle |
| | 6. Measurement of the pH of the pectoral muscles | 10 measurements × 9 measurement dates on the day of slaughter (1) and on day 3,,5,7,8,9,10,11,12 of refrigerated storage under stable temperature conditions of 2°C +/- 0.5°C) × 3 repetitions of the test cycle = 270 measurements for the trait under study* | breast muscle after heat treatment | |

| 7. Evaluation of physical characteristics: | | | | |
|---|---|---|---|---|
| | c) Brittleness measured by cu]ng force using a testing machine equipped with a 60° single-leg cu]ng system with appropriate softwa re | 10 measurements × 9 measurement dates on the day of slaughter (1) and on day 3,5,7,8,9,10,11,12 of refrigerated storage under stable temperature conditions of 2°C +/- 0.5°C) × 3 repetitions of the test cycle = 270 measurements for the trait tested | breast muscle after heat treatment | |
| | d) Meat color using the CIE LAB colorimeter scale | 10 measurements × 9 measurement dates on the day of slaughter (1) and on day 3,5,7,8,9,10,11,12 of refrigerated storage under stable temperature conditions of 2°C +/- 0.5°C) × 3 repetitions of the test cycle = 270 measurements for the trait tested | breast muscle after heat treatment | |
| | 8. Evaluation of sensory characteristics | 10 samples × 9 measurement dates on the day of slaughter (1) and on day 3,5,7,8,9,10,11,12 of refrigerated storage under stable temperature conditions of 2°C +/- 0.5°C) × 3 repetitions of the test cycle = 270 measurements for the trait tested | breast muscle after heat treatment | |
| | 9. Post-cooking performance/ther mal loss | 10 samples × 9 dates on the day of slaughter (1) and on day 3,5,7,8,9,10,11,12 of refrigerated storage under stable temperature conditions of 2°C +/- 0.5°C) × 3 repetitions of the test cycle = 270 measurements for the trait tested | breast muscle after heat treatment | |
| 10. compilation and development of stage 1, 2 and 3 study reports | | | | |

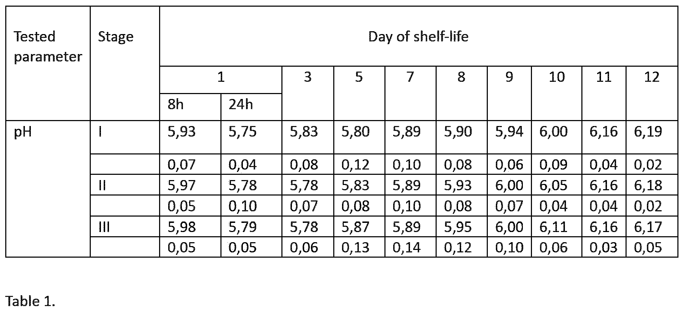

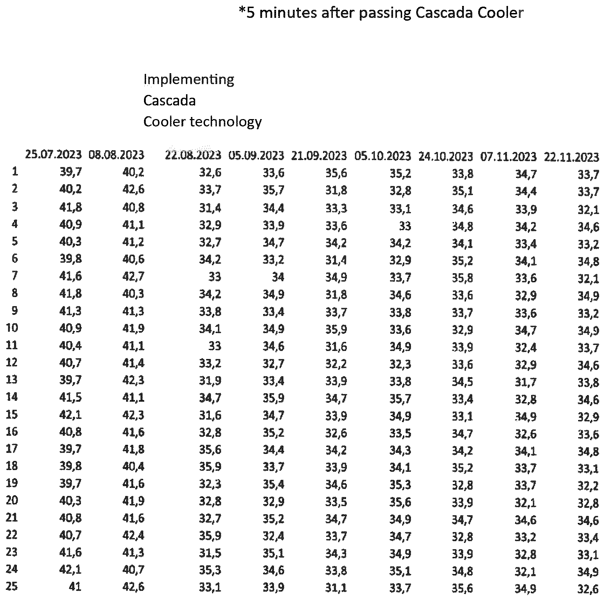

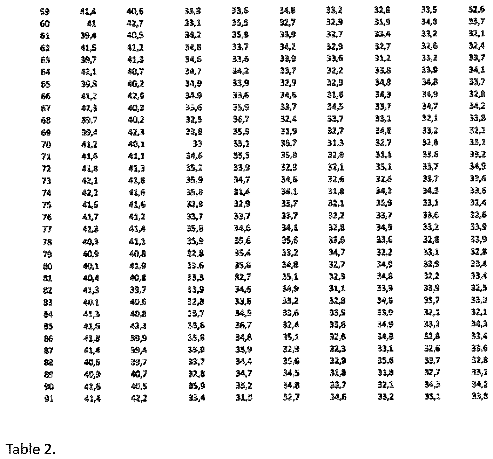

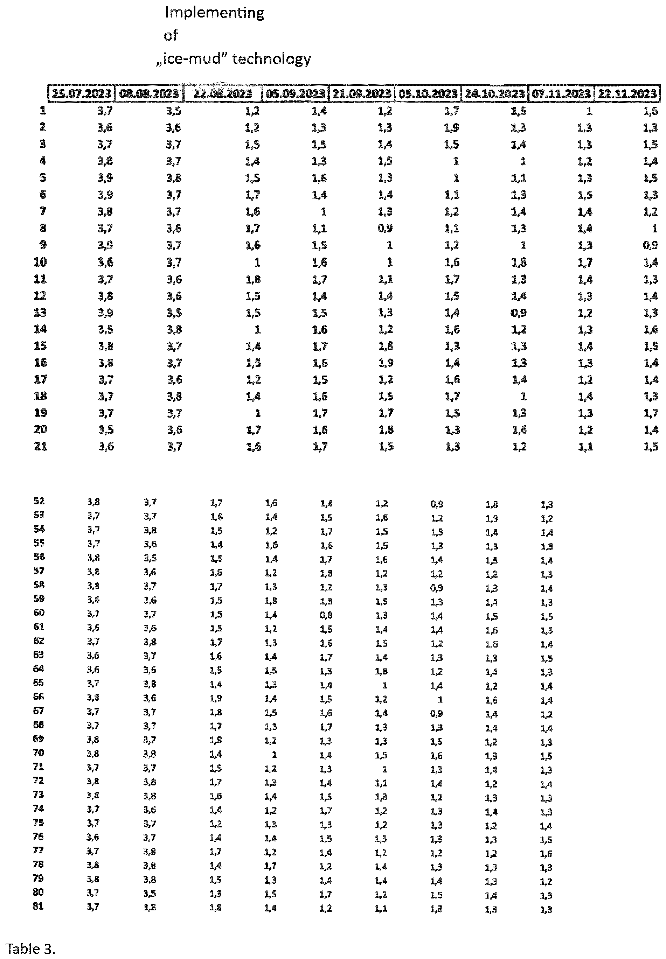

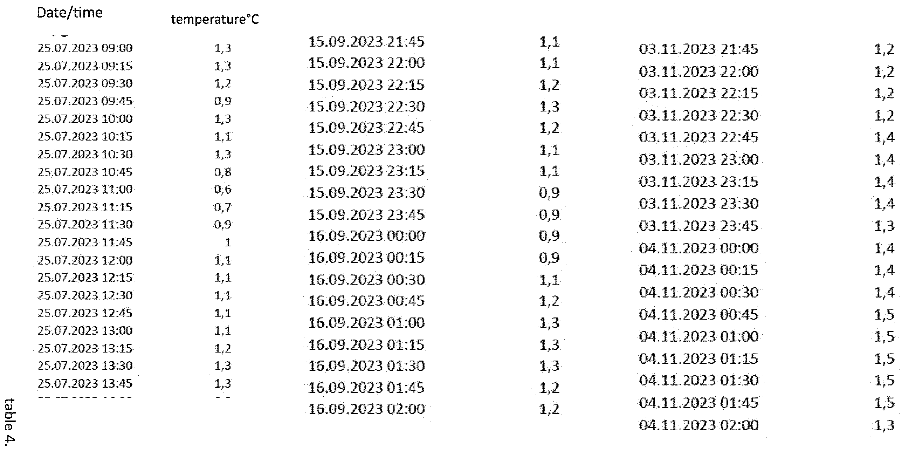

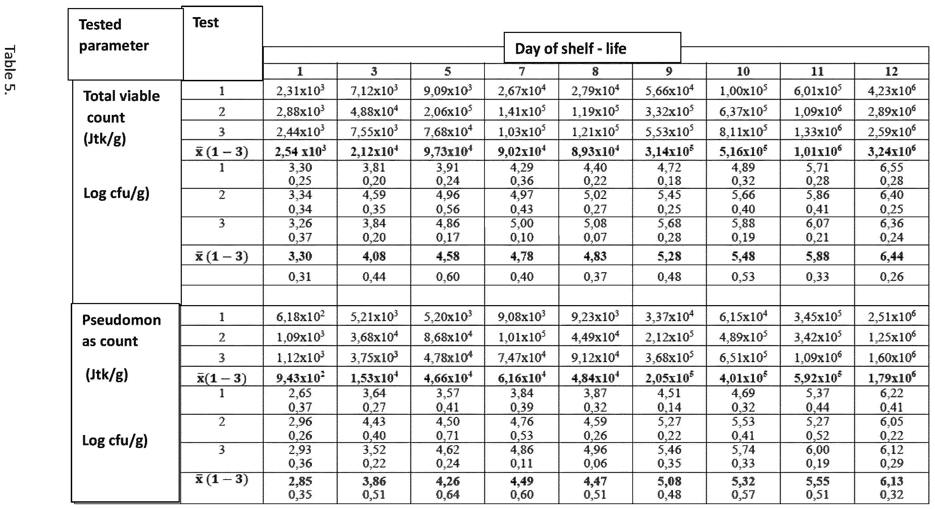

## Claims

1. A method for extending the shelf life of broiler chicken meat stored under refrigeration, **characterized in that** it comprises the following steps:
- along the passage section from the moment of suspension on the stirrups to the entrance to the water-electric stunner, the massager mimics the calming effect for broiler chickens,
- the carcass, which is then suspended in stirrups, undergoes washing by passing through nozzles and then through the area of brush rollers, opening the feathers to the scalding stage,
- cooling the carcass after plucking, before evisceration, using ice water,
- carcass evisceration,
- washing and disinfection equipped with high-pressure nozzles for washing the gutting spoons, nests and supports results in a reduction of microbial cross-contamination at this stage,
- follows the splitting of carcasses, automatic cutting of breast muscles and automated calibration of carcasses, and then placing them in shipping containers.

2. The method according to claim 1, **characterized in that** as a result of measures taken to improve the level of chicken welfare including elimination of potential stress factors, including those causing mechanical injury, optimization of thermal conditions during loading, transport and unloading, and installation of a chicken breast massager on the suspension line, a carcass pH of 5.93 ± 0.06 was achieved.

3. The method according to claim 1, **characterized in that the** Cascada cooler consists of feeding ice water, at a temperature of about 1.5°C, to the carcasses over a distance of about 3 m, the temperature is reached in no more than 5 minutes, and the temperature of the carcass after plucking is 35°C.

4. The method according to claim 1, **characterized in that the** cooling of the carcass after evisceration comprises moving the carcasses suspended on stirrups, where spray nozzles feed the "ice mud" on the outside and inside of the carcass.

5. The method according to claim 1, **characterized in that** the ice mud has 82 times the cooling capacity of ice water.

6. The method according to claim 1, **characterized in that** after the whole process the carcass reaches a temperature of 2°C in less than 120 minutes.

7. The method according to claim 1, **characterized in that it** ensures that the meat storage temperature is maintained at 0-2°C with ongoing temperature monitoring to reduce the growth rate of microorganisms in the meat.

8. The method according to claim 1, **characterized in that** after the whole process the total number of bacteria in 1 g was max. 5× 10⁶ on the 12th day of storage.
